# EUROPEAN PATENT APPLICATION

(11) **EP 4 516 853 A1**
(43) Date of publication of application: **05.03.2025**
(21) Application number: 23796025.7
(22) Date of filing: 04.04.2023
(51) Int. Cl.: C08L 23/12, B32B 27/00, B32B 27/32, B65D 65/40, C08J 5/18, C08L 23/08, C08L 23/14

(54) **SEALANT FILM, PACKAGING MATERIAL, AND PACKAGE**

(30) Priority: 28.04.2022 JP 2022074258; 28.04.2022 JP 2022074259; 28.04.2022 JP 2022074260
(71) Applicant: Toppan Holdings Inc., Tokyo 110-0016 (JP)
(72) Inventor: HAMADA, Daisuke, Tokyo 110-0016 (JP); OKI, Tomoko, Tokyo 110-0016 (JP)
(74) Representative: TBK
(86) International application number: PCT/JP2023/013990
(87) International publication number: WO 2023/210278

(57) **Abstract**

There is provided a sealant film including a first layer which contains a propylene homopolymer (A), a propylene-ethylene random copolymer (B), and a predetermined amount of an ethylene-α-olefin copolymer elastomer (C1), propylene-ethylene-α-olefin copolymer elastomer (C2), or propylene-α-olefin copolymer elastomer (C3).

## Description

### Technical Field

The present invention relates to a sealant film, a packaging material, and a package. Specifically, the present invention relates to a sealant film, which has excellent heat resistance and excellent low temperature sealability, while being a polypropylene-based film, and can be suitably used as a packaging material, for severe treatments such as a boiling water treatment and a retort treatment, as well as a packaging material and a packaging sack, which are obtained using the sealant film.

### Background Art

A polypropylene-based non-stretched film has excellent rigidity and excellent heat resistance and is inexpensive, and thus it is sometimes used as a sealant film in various packaging materials for food packaging and the like.

Patent Literature 1 proposes a polypropylene-based film, which contains a crystalline propylene polymer having a melting point of 120°C to 165°C, an ethylene-α-olefin copolymer, and a copolymer of ethylene and at least one selected from an α-olefin having 3 to 20 carbon atoms, a cyclic olefin, or a cyclic polyene.

Patent Literature 2 proposes a polypropylene-based film characterized by consisting of a crystalline propylene-α-olefin random copolymer and an ethylene-α-olefin random copolymer.

Patent Literature 3 proposes a polypropylene-based composite film characterized by being a polypropylene-based composite film composed of three layers, where an interlayer consists of a propylene-ethylene block copolymer, and both surface layers consist of a propylene-based random copolymer.

### Citation List

### Patent Literature

[Patent Literature 1] Japanese Unexamined Patent Publication No. 2003-119298
[Patent Literature 2] Japanese Unexamined Patent Publication No. 2004-359711
[Patent Literature 3] Japanese Unexamined Patent Publication No. 2017-132186

### Summary of Invention

### Technical Problem

In a case of being used as a sealant film, a polypropylene-based non-stretched film is required to have heat resistance that withstands, for example, a retort treatment of carrying out a pressurization treatment at a high temperature of 135°C, which is a high retort condition, thereby carrying out disinfection and sterilization.

In addition, in recent years, studies on packaging materials having a mono-material configuration, which use a biaxially oriented polypropylene film (OPP) base material and a polypropylene-based non-stretched film, have been underway for the purpose of improving the recyclability of packaging materials. However, the biaxially oriented polypropylene film has a lower melting point as compared with a biaxially oriented polyamide film (ONy), a biaxially oriented polyester film (PET), and the like, which have been used as base materials in the related art. Therefore, the circumstance is such that heat sealing cannot be carried out at high temperatures during the sack manufacturing processing. Therefore, polypropylene-based non-stretched films are now required to have low temperature sealability so that heat sealing can be carried out appropriately even in a case where the heat seal temperature is lowered.

However, it is currently difficult to achieve both excellent heat resistance and excellent low temperature sealability with a polypropylene non-stretched film in the related art.

The present invention has been made in consideration of the above circumstances, and an object of the present invention is to provide a sealant film, which is capable of achieving both excellent heat resistance and excellent low temperature sealability, while being a polypropylene-based film. In addition, another object of the present invention is to provide a packaging material and a package, which are obtained using the sealant film.

### Solution to Problem

As a result of diligent studies to achieve the above objects, the inventors of the present invention found that it is important that a predetermined amount of an ethylene-α-olefin copolymer elastomer (C1), a propylene-ethylene-α-olefin copolymer elastomer (C2), or a propylene-α-olefin copolymer elastomer (C3) be contained in a resin composition containing a propylene homopolymer (A) and a propylene-ethylene random copolymer (B), thereby completing the present invention.

A sealant film according to one aspect of the present invention contains a first layer, which contains a propylene homopolymer (A), a propylene-ethylene random copolymer (B), and an ethylene-α-olefin copolymer elastomer (C1), where a content of the ethylene-α-olefin copolymer elastomer (C1) is 5.0 to 11.5 parts by mass with respect to a total amount of 100 parts by mass of the propylene homopolymer (A) and the propylene-ethylene random copolymer (B).

In one aspect in which the ethylene-α-olefin copolymer elastomer (C1) is used, it is preferable that a mass ratio of a content of the propylene homopolymer (A) to a content of the propylene-ethylene random copolymer (B) is in a range of 0.40 to 0.95. As a result, it is easy to obtain more excellent low temperature sealability while maintaining heat resistance.

A sealant film according to one aspect of the present invention contains a first layer, which contains a propylene homopolymer (A), a propylene-ethylene random copolymer (B), and a propylene-ethylene-α-olefin copolymer elastomer (C2), where a content of the propylene-ethylene-α-olefin copolymer elastomer (C2) is 5.0 to 14.5 parts by mass with respect to a total amount of 100 parts by mass of the propylene homopolymer (A) and the propylene-ethylene random copolymer (B).

In one aspect in which the propylene-ethylene-α-olefin copolymer elastomer (C2) is used, it is preferable that a mass ratio of a content of the propylene homopolymer (A) to a content of the propylene-ethylene random copolymer (B) is in a range of 0.10 to 0.95. As a result, it is easy to obtain more excellent low temperature sealability while maintaining heat resistance.

A sealant film according to one aspect of the present invention contains a first layer, which contains a propylene homopolymer (A), a propylene-ethylene random copolymer (B), and a propylene-α-olefin copolymer elastomer (C3), where a content of the propylene-α-olefin copolymer elastomer (C3) is 5.0 to 25.0 parts by mass with respect to a total amount of 100 parts by mass of the propylene homopolymer (A) and the propylene-ethylene random copolymer (B).

In one aspect in which the propylene-α-olefin copolymer elastomer (C3) is used, it is preferable that a mass ratio of a content of the propylene homopolymer (A) to a content of the propylene-ethylene random copolymer (B) is in a range of 0.12 to 0.95. As a result, it is easy to obtain more excellent low temperature sealability while maintaining heat resistance.

The sealant film makes it possible to achieve both excellent heat resistance and excellent low temperature sealability. This effect cannot be obtained in a case of using a resin composition containing a crystalline propylene polymer, an ethylene-α-olefin copolymer, and a copolymer of ethylene and at least one selected from an α-olefin having 3 to 20 carbon atoms, a cyclic olefin, or a cyclic polyene (for example, Patent Literature 1), in a case of using a resin composition consisting of a crystalline propylene-α-olefin random copolymer and an ethylene-α-olefin random copolymer (for example, Patent Literature 2), or in a case of using a propylene-based random copolymer on a surface layer (for example, Patent Literature 3), and it is a suitable effect particularly in a use application as a retort packaging material having a polypropylene-based mono-material configuration.

In one aspect, the sealant film may contain the first layer and a second layer, which contains a propylene-ethylene block copolymer (D) and an ethylene-propylene copolymer elastomer (E). This makes it easy for the film to obtain excellent cold impact resistance.

In one aspect, the sealant film may contain, in the following order, the first layer, the second layer, and a third layer, which contains the propylene homopolymer (A) and the propylene-ethylene random copolymer (B). As a result, it is easy to suppress the distortion or warpage of the film.

In one aspect, the second layer may contain 90% to 50% by mass of the propylene-ethylene block copolymer (D) and 10% to 50% by mass of the ethylene-propylene copolymer elastomer (E). This makes it easy for the film to obtain more excellent cold impact resistance.

In one aspect, the thickness of the second layer may be 20 µm or more. This makes it easy for the film to obtain more excellent cold impact resistance.

A packaging material according to one aspect of the present invention includes the sealant film described above and a resin film having a metal oxide vapor deposition layer.

A packaging material according to one aspect of the present invention includes the sealant film described above and a biaxially oriented polypropylene film.

A package according to one aspect of the present invention is manufactured from the packaging material described above.

### Advantageous Effects of Invention

According to the present invention, it is possible to provide a sealant film, which is capable of achieving both excellent heat resistance and excellent low temperature sealability at a high level in a well-balanced manner, while being a polypropylene-based film. In addition, according to the present invention, it is possible to provide a packaging material and a package, which are obtained using the sealant film.

The sealant film according to the present invention has heat resistance that withstands a retort treatment of carrying out disinfection and sterilization at a high temperature of 135°C, which is a high retort condition, and it has excellent low temperature sealability that enables heat sealing even in a case of being used together with a biaxially oriented polypropylene film (OPP) base material (even in a case of a packaging material composed of the same polypropylene material).

### Brief Description of Drawings

FIG. 1 is a cross-sectional view of a sealant film according to one embodiment of the present invention.
FIG. 2 is a cross-sectional view of a sealant film according to one embodiment of the present invention.
FIG. 3 is a cross-sectional view of a sealant film according to one embodiment of the present invention.
FIG. 4 is a cross-sectional view of a packaging material according to one embodiment of the present invention.
FIG. 5 is a cross-sectional view of a packaging material according to one embodiment of the present invention.
FIG. 6 is a cross-sectional view of a packaging material according to one embodiment of the present invention.

### Description of Embodiments

### <Sealant Film 100>

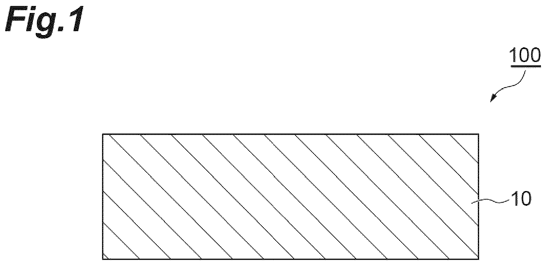

FIG. 1 is a cross-sectional view of a sealant film 100 according to one embodiment of the present invention. The sealant film 100 includes a first layer 10, which contains a propylene homopolymer (A), a propylene-ethylene random copolymer (B), and an ethylene-α-olefin copolymer elastomer (C1), a propylene-ethylene-α-olefin copolymer elastomer (C2), or a propylene-α-olefin copolymer elastomer (C3).

### (Propylene homopolymer (A))

The propylene homopolymer (A) can be obtained by a method of homopolymerizing propylene using, for example, a Ziegler-Natta catalyst, a metallocene catalyst, or a half-metallocene catalyst. Since the sealant film contains the propylene homopolymer (A), excellent heat resistance can be imparted to the first layer. As a result, fusion is less likely to occur on the inner surface of the packaging sack, for example, after a pressurization and heating treatment is carried out under a high retort condition of 135°C.

As the propylene homopolymer (A), a propylene homopolymer having a melting start temperature of 150°C or higher and a melting point of 155°C or higher in a case where differential scanning calorimetry (JIS K 7121) is carried out, can be used. In a case where the melting start temperature and the melting point are both within this range, more excellent heat resistance can be imparted to the first layer. As a result, fusion is much less likely to occur on the inner surface of the packaging sack, for example, after a pressurization and heating treatment is carried out under a high retort condition of 135°C. The conditions for differential scanning calorimetry are as follows.

### [Conditions for differential scanning calorimetry]

An intersection point between a straight line obtained by extending a baseline of a DSC curve on a low temperature side to a high temperature side and a tangential line drawn so that the tangential line is in contact with a curve on a low temperature side of the melting peak and the slope thereof is maximized is defined as the melting start temperature in a case where the temperature is raised at 10°C/min from 25°C to 230°C, and a temperature at the apex of the melting peak is defined as the melting point.

As the propylene homopolymer (A), a propylene homopolymer in which the melt flow rate (MFR: ISO 1133) (temperature: 230°C, load: 2.16 kg) is in a range of 2.0 to 7.0 g/10 minutes, can be used. In a case where the melt flow rate is equal to or larger than the lower limit value, the extruder load during molding processing is reduced, processing speed is less likely to decrease, and excellent productivity is easily maintained. In addition, in a case where the melt flow rate is equal to or smaller than the upper limit value, the first layer is likely to have excellent impact resistance.

### (Propylene-ethylene random copolymer (B))

The propylene-ethylene random copolymer (B) can be obtained by copolymerizing ethylene as a comonomer in a main monomer consisting of propylene by using, for example, a Ziegler-Natta catalyst, a metallocene catalyst, or a half-metallocene catalyst. Since the first layer contains the propylene-ethylene random copolymer (B), it is easy to obtain excellent low temperature sealability while maintaining heat resistance.

As the propylene-ethylene random copolymer (B), a propylene-ethylene random copolymer in which the melting point is in a range of 132 to 150°C in a case where differential scanning calorimetry (JIS K 7121) is carried out, can be used. In a case where such as one that has a melting point within this range is used, it is easy to obtain excellent low temperature sealability while maintaining heat resistance. The conditions for differential scanning calorimetry are as follows.

### [Conditions for differential scanning calorimetry]

A temperature at the apex of the melting peak in a DSC curve is defined as the melting point in a case where the temperature is raised at 10°C/min from 25°C to 230°C.

The ethylene content of the propylene-ethylene random copolymer (B) may be 6% by mass or less. In a case where the ethylene content is equal to or smaller than the upper limit value, heat resistance is less likely to decrease excessively while low temperature sealability is maintained. As a result, it is easier to further suppress fusion on the inner surface of the packaging sack after a pressurization and heating treatment under a high retort condition of 135°C. From this point of view, the ethylene content may be 5.5% by mass or less or may be 4.5% by mass or less. The lower limit of ethylene content is not particularly limited; however, it can be set to 3% by mass from the viewpoint of low temperature sealability.

The ethylene content of the propylene-ethylene random copolymer (B) can be measured according to the quantification method for an ethylene content (IR method), which is described on pages 412-413 of the Polymer Analysis Handbook (May 10, 2013, 3rd print), edited by the Symposium on Polymer Analysis and Characterization, the Japan Society for Analytical Chemistry.

### (Ethylene-α-olefin copolymer elastomer (C1))

The ethylene-α-olefin copolymer elastomer (C1) can be obtained by copolymerizing ethylene and α-olefin using, for example, a Ziegler-Natta catalyst, a metallocene catalyst, or a half-metallocene catalyst. Since the first layer contains the ethylene-α-olefin copolymer elastomer (C1), excellent low temperature sealability can be obtained. In addition, since the first layer contains the ethylene-α-olefin copolymer elastomer (C1), it is easy to obtain excellent cold impact resistance and pinhole resistance.

As the ethylene-α-olefin copolymer elastomer (C1), an ethylene-α-olefin copolymer elastomer having a structural unit derived from ethylene and a structural unit derived from an α-olefin having 4 to 20 carbon atoms can be used. As a result, it is easy to obtain excellent low temperature sealability. The ethylene-α-olefin copolymer elastomer (C1) may be a random copolymer.

Examples of the α-olefin having 4 to 20 carbon atoms include 1-butene, 1-pentene, 1-hexene, 1-heptene, 1-octene, 1-nonene, 1-decene, 1-hexadecene, 1-eicosene, 4-methyl-1-pentene, and 4-methyl-1-hexene. The α-olefin having 4 to 20 carbon atoms is preferably 1-butene or 1-hexene. The ethylene-α-olefin copolymer elastomer (C1) may have two or more structural units derived from these α-olefins having 4 to 20 carbon atoms.

As the ethylene-α-olefin copolymer elastomer (C1), an ethylene-α-olefin copolymer elastomer in which a content of a structural unit derived from ethylene is in a range of 75% to 97% by mass and preferably 80% to 95% by mass based on 100% by mass of the total amount (total amount of structural units) of the ethylene-α-olefin copolymer elastomer (C1), can be used. In a case where the content of the structural unit derived from ethylene is equal to or larger than the lower limit value, it is easy to maintain excellent heat resistance. In addition, in a case where the content of the structural unit derived from ethylene is equal to or smaller than the upper limit value, it is easy to obtain excellent low temperature sealability.

As the ethylene-α-olefin copolymer elastomer (C1), an ethylene-α-olefin copolymer elastomer in which the density (JIS K 7112) is in a range of 860 to 950 kg/m³, can be used. In a case where the density is equal to or larger than the lower limit value, the tackiness of the film can be suppressed. In addition, in a case where the density is equal to or smaller than the upper limit value, it is easy to obtain low temperature sealability.

As the ethylene-α-olefin copolymer elastomer (C1), an ethylene-α-olefin copolymer elastomer in which the melt flow rate (MFR: ISO 1133) (temperature: 190°C, load: 2.16 kg) is 0.5 to 15 g/10 minutes and preferably in a range of 0.5 to 10 g/10 minutes or 0.5 to 5 g/10 minutes, can be used. In a case where the melt flow rate is equal to or larger than the lower limit value, the extruder load during molding processing is reduced, processing speed is less likely to decrease, and excellent productivity is easily maintained. In addition, in a case where the melt flow rate is equal to or smaller than the upper limit value, the compatibility with the propylene homopolymer (A) and the propylene-ethylene random copolymer (B) is favorable, and it is easy to maintain heat resistance.

The first layer contains 5.0 to 11.5 parts by mass of the ethylene-α-olefin copolymer elastomer (C1) with respect to the total amount of 100 parts by mass of the propylene homopolymer (A) and the propylene-ethylene random copolymer (B). Since the content of the ethylene-α-olefin copolymer elastomer (C1) is within the above-described range, it is easy to obtain low temperature sealability while maintaining excellent heat resistance. From the viewpoint described above, the content may be 6.0 to 10 parts by mass or may be 7.0 to 9.0 parts by mass.

In the first layer which contains the ethylene-α-olefin copolymer elastomer (C1), a mass ratio of a content of the propylene homopolymer (A) to a content of the propylene-ethylene random copolymer (B), (A)/(B), may be in a range of 0.40 to 0.95. In a case where the mass ratio (A)/(B) is equal to or larger than the lower limit value, it is easy to maintain excellent heat resistance. In addition, in a case where the mass ratio (A)/(B) is equal to or smaller than the upper limit value, it is easy to obtain excellent low temperature sealability. From this point of view, the mass ratio (A)/(B) may be 0.50 to 0.94 or may be 0.60 to 0.93.

### (Propylene-ethylene-α-olefin copolymer elastomer (C2))

The propylene-ethylene-α-olefin copolymer elastomer (C2) can be obtained by copolymerizing propylene, ethylene, and α-olefin using, for example, a Ziegler-Natta catalyst, a metallocene catalyst, or a half-metallocene catalyst. Since the first layer contains the propylene-ethylene-α-olefin copolymer elastomer (C2), excellent low temperature sealability can be obtained. In addition, since the first layer contains the propylene-ethylene-α-olefin copolymer elastomer (C2), it is easy to obtain excellent bending whitening resistance and excellent scratch resistance.

As the propylene-ethylene-α-olefin copolymer elastomer (C2), a propylene-ethylene-α-olefin copolymer elastomer having a structural unit derived from propylene and ethylene and a structural unit derived from an α-olefin having 4 to 20 carbon atoms can be used. As a result, it is easy to obtain excellent low temperature sealability. The propylene-ethylene-α-olefin copolymer elastomer (C2) may be a random copolymer.

Examples of the α-olefin having 4 to 20 carbon atoms include 1-butene, 1-pentene, 1-hexene, 1-heptene, 1-octene, 1-nonene, 1-decene, 1-hexadecene, 1-eicosene, 4-methyl-1-pentene, and 4-methyl-1-hexene. The α-olefin having 4 to 20 carbon atoms is preferably 1-butene or 1-hexene. The propylene-ethylene-α-olefin copolymer elastomer (C2) may have two or more structural units derived from these α-olefins having 4 to 20 carbon atoms.

As the propylene-ethylene-α-olefin copolymer elastomer (C2), a propylene-ethylene-α-olefin copolymer elastomer in which a content of a structural unit derived from propylene is in a range of 60% to 85% by mass and preferably 65% to 80% by mass based on 100% by mass of the total amount (total amount of structural units) of the propylene-ethylene-α-olefin copolymer elastomer (C2), can be used. In a case where the content of the structural unit derived from propylene is equal to or larger than the lower limit value, it is easy to maintain excellent heat resistance. In addition, in a case where the content of the structural unit derived from propylene is equal to or smaller than the upper limit value, it is easy to obtain excellent low temperature sealability.

As the propylene-ethylene-α-olefin copolymer elastomer (C2), a propylene-ethylene-α-olefin copolymer elastomer in which a content of a structural unit derived from ethylene is in a range of 1% to 10% by mass based on 100% by mass of the total amount (total amount of structural units) of the propylene-ethylene-α-olefin copolymer elastomer (C2), can be used. In a case where the content of the structural unit derived from ethylene is equal to or larger than the lower limit value, it is easy to obtain low temperature sealability. In addition, in a case where the content of the structural unit derived from ethylene is equal to or smaller than the upper limit value, it is easy to suppress a decrease in heat resistance.

As the propylene-ethylene-α-olefin copolymer elastomer (C2), a propylene-ethylene-α-olefin copolymer elastomer in which a content of a structural unit derived from α-olefin is in a range of 10% to 30% by mass based on 100% by mass of the total amount (total amount of structural units) of the propylene-ethylene-α-olefin copolymer elastomer (C2), can be used. In a case where the content of the structural unit derived from α-olefin is equal to or larger than the lower limit value, it is easy to obtain a low temperature seal. In addition, in a case where the content of the structural unit derived from α-olefin is equal to or smaller than the upper limit value, it is easy to suppress a decrease in heat resistance.

As the propylene-ethylene-α-olefin copolymer elastomer (C2), a propylene-ethylene-α-olefin copolymer elastomer in which the density (JIS K 7112) is in a range of 850 to 900 kg/m³, can be used. In a case where the density is equal to or larger than the lower limit value, the tackiness of the film can be suppressed. In addition, in a case where the density is equal to or smaller than the upper limit value, it is easy to obtain low temperature sealability.

As the propylene-ethylene-α-olefin copolymer elastomer (C2), a propylene-ethylene-α-olefin copolymer elastomer in which the melt flow rate (MFR: ISO 1133) (temperature: 230°C, load: 2.16 kg) is 0.5 to 15 g/10 minutes and preferably in a range of 1 to 10 g/10 minutes or 2 to 7 g/10 minutes, can be used. In a case where the melt flow rate is equal to or larger than the lower limit value, the extruder load during molding processing is reduced, processing speed is less likely to decrease, and excellent productivity is easily maintained. In addition, in a case where the melt flow rate is equal to or smaller than the upper limit value, the compatibility with the propylene homopolymer (A) and the propylene-ethylene random copolymer (B) is favorable, and it is easy to maintain heat resistance.

The first layer contains 5.0 to 14.5 parts by mass of the propylene-ethylene-α-olefin copolymer elastomer (C2) with respect to the total amount of 100 parts by mass of the propylene homopolymer (A) and the propylene-ethylene random copolymer (B). Since the content of the propylene-ethylene-α-olefin copolymer elastomer (C2) is within the above-described range, it is easy to obtain low temperature sealability while maintaining excellent heat resistance. From the viewpoint described above, the content may be 6.0 to 12.0 parts by mass or may be 7.0 to 9.0 parts by mass.

In the first layer which contains the propylene-ethylene-α-olefin copolymer elastomer (C2), a mass ratio of a content of the propylene homopolymer (A) to a content of the propylene-ethylene random copolymer (B), (A)/(B), may be in a range of 0.10 to 0.95. In a case where the mass ratio (A)/(B) is equal to or larger than the lower limit value, it is easy to maintain excellent heat resistance. In addition, in a case where the mass ratio (A)/(B) is equal to or smaller than the upper limit value, it is easy to obtain excellent low temperature sealability. From this point of view, the mass ratio (A)/(B) may be 0.30 to 0.94 or may be 0.40 to 0.93.

### (Propylene-α-olefin copolymer elastomer (C3))

The propylene-α-olefin copolymer elastomer (C3) can be obtained by copolymerizing propylene and α-olefin using, for example, a Ziegler-Natta catalyst, a metallocene catalyst, or a half-metallocene catalyst. Since the first layer contains the propylene-α-olefin copolymer elastomer (C3), excellent low temperature sealability can be obtained. In addition, since the first layer contains the propylene-α-olefin copolymer elastomer (C3), it is easy to obtain excellent cold impact resistance, excellent blocking resistance, excellent scratch resistance, and excellent bending whitening resistance.

As the propylene-α-olefin copolymer elastomer (C3), a propylene-α-olefin copolymer elastomer having a structural unit derived from propylene and a structural unit derived from an α-olefin having 4 to 20 carbon atoms can be used. As a result, it is easy to obtain excellent low temperature sealability. The propylene-α-olefin copolymer elastomer (C3) may be a random copolymer.

Examples of the α-olefin having 4 to 20 carbon atoms include 1-butene, 1-pentene, 1-hexene, 1-heptene, 1-octene, 1-nonene, 1-decene, 1-hexadecene, 1-eicosene, 4-methyl-1-pentene, and 4-methyl-1-hexene. The α-olefin having 4 to 20 carbon atoms is preferably 1-butene or 1-hexene. The propylene-α-olefin copolymer elastomer (C3) may have two or more structural units derived from these α-olefins having 4 to 20 carbon atoms.

As the propylene-α-olefin copolymer elastomer (C3), a propylene-α-olefin copolymer elastomer in which a content of a structural unit derived from propylene is in a range of 65% to 97% by mass and preferably 70% to 90% by mass based on 100% by mass of the total amount (total amount of structural units) of the propylene-α-olefin copolymer elastomer (C3), can be used. In a case where the content of the structural unit derived from propylene is equal to or larger than the lower limit value, it is easy to maintain excellent heat resistance. In addition, in a case where the content of the structural unit derived from propylene is equal to or smaller than the upper limit value, it is easy to obtain excellent low temperature sealability.

As the propylene-α-olefin copolymer elastomer (C3), an propylene-α-olefin copolymer elastomer in which the density (JIS K 7112) is in a range of 860 to 950 kg/m³, can be used. In a case where the density is equal to or larger than the lower limit value, the tackiness of the film can be suppressed. In addition, in a case where the density is equal to or smaller than the upper limit value, it is easy to obtain low temperature sealability.

As the propylene-α-olefin copolymer elastomer (C3), a propylene-ethylene-α-olefin copolymer elastomer in which the melt flow rate (MFR: ISO 1133) (temperature: 230°C, load: 2.16 kg) is 0.5 to 15 g/10 minutes and preferably in a range of 1 to 10 g/10 minutes or 3 to 8 g/10 minutes, can be used. In a case where the melt flow rate is equal to or larger than the lower limit value, the extruder load during molding processing is reduced, processing speed is less likely to decrease, and excellent productivity is easily maintained. In addition, in a case where the melt flow rate is equal to or smaller than the upper limit value, the compatibility with the propylene homopolymer (A) and the propylene-ethylene random copolymer (B) is favorable, and it is easy to maintain heat resistance.

The first layer contains 5.0 to 25.0 parts by mass of the propylene-α-olefin copolymer elastomer (C3) with respect to the total amount of 100 parts by mass of the propylene homopolymer (A) and the propylene-ethylene random copolymer (B). Since the content of the propylene-α-olefin copolymer elastomer (C3) is within the above-described range, it is easy to obtain low temperature sealability while maintaining excellent heat resistance. From the viewpoint described above, the content may be 5.0 to 15.0 parts by mass or may be 5.0 to 10.0 parts by mass.

In the first layer which contains the propylene-α-olefin copolymer elastomer (C3), a mass ratio of a content of the propylene homopolymer (A) to a content of the propylene-ethylene random copolymer (B), (A)/(B), may be in a range of 0.12 to 0.95. In a case where the mass ratio (A)/(B) is equal to or larger than the lower limit value, it is easy to maintain excellent heat resistance. In addition, in a case where the mass ratio (A)/(B) is equal to or smaller than the upper limit value, it is easy to obtain excellent low temperature sealability. From this point of view, the mass ratio (A)/(B) may be 0.14 to 0.94 or may be 0.30 to 0.93.

### <Sealant film 101>

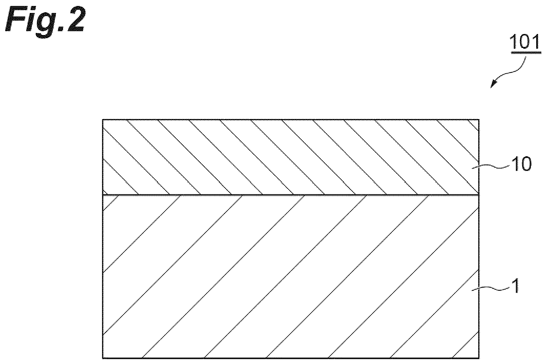

FIG. 2 is a cross-sectional view of a sealant film 101 according to one embodiment of the present invention. The sealant film 101 contains a first layer 10 as a heat seal layer and a second layer 1, which contains a propylene-ethylene block copolymer (D) and an ethylene-propylene copolymer elastomer (E). Since a second layer is provided, it easy for the sealant film to obtain more excellent cold impact resistance.

### (Propylene-ethylene block copolymer (D))

The propylene-ethylene block copolymer (D) is a copolymer that can be obtained by producing a propylene polymer (D1) in a first step and subsequently producing an ethylene-propylene copolymer (D2) by gas phase polymerization in a second step. The propylene-ethylene block copolymer (D) is not a block copolymer in which a propylene polymer terminal is bonded to an ethylene-propylene copolymer terminal but is a kind of blended copolymer. Since the second layer contains the propylene-ethylene block copolymer (D), it is easy to obtain excellent cold impact resistance.

As the propylene-ethylene block copolymer (D), a propylene-ethylene block copolymer in which the melt flow rate (MFR: ISO 1133) (temperature: 230°C, load: 2.16 kg) is in a range of 0.5 to 2.5 g/10 minutes, can be used. In a case where the melt flow rate is equal to or larger than the lower limit value, the extruder load during molding processing is reduced, processing speed is less likely to decrease, and excellent productivity is easily maintained. In a case where the melt flow rate is equal to or smaller than the upper limit value, it is easy for the second layer to obtain excellent cold impact resistance.

The propylene-ethylene block copolymer (D) may contain 90% to 60% by mass of the propylene polymer (D1) and 10% to 40% by mass of the ethylene-propylene copolymer (D2). In a case where each component is in this range, it is easy to obtain excellent cold impact resistance. From this point of view, the propylene-ethylene block copolymer (D) may contain 87.5% to 65% by mass of the propylene polymer (D1) and 12.5% to 35% by mass of the ethylene-propylene copolymer (D2), or may contain 85% to 70% by mass of the propylene polymer (D1) and 15% to 30% by mass of the ethylene-propylene copolymer (D2).

The ethylene content of the ethylene-propylene copolymer (D2) is not particularly limited; however, it can be set in a range of 20% to 40% by mass. In a case where the ethylene content is equal to or smaller than the upper limit value, it is possible to suppress the tackiness of the product, the contamination due to the tacking of the product is less likely to occur during the production, and it is easy to maintain excellent productivity. In a case where the ethylene content is equal to or larger than the lower limit value, it is easy to obtain excellent cold impact resistance.

### (Ethylene-propylene copolymer elastomer (E))

The ethylene-propylene copolymer elastomer (E) can be obtained by, for example, a slurry polymerization method that is carried out in the presence of an inert hydrocarbon such as hexane, heptane, kerosene, or a liquefied α-olefin solvent such as propylene, or a gas phase polymerization method under no solvent. Specifically, the ethylene-propylene copolymer elastomer (E) can be obtained using a publicly known multi-stage polymerization method. That is to say, it is a polymerization-type polypropylene-based resin having a high rubber content, which can be obtained by polymerizing propylene and/or a propylene-α-olefin polymer in a first stage reactor and then copolymerizing propylene and α-olefin in a second stage reaction. Since the second layer contains the ethylene-propylene copolymer elastomer (E), it is easy to obtain more excellent cold impact resistance.

As the ethylene-propylene copolymer elastomer (E), an ethylene-propylene copolymer elastomer in which the melt flow rate (MFR: ISO 1133) (temperature: 230°C, load: 2.16 kg) is in a range of 0.5 to 3.5 g/10 minutes, can be used. In a case where the melt flow rate is equal to or larger than the lower limit value, the extruder load during molding processing is reduced, processing speed is less likely to decrease, and excellent productivity is easily maintained. In a case where the melt flow rate is equal to or smaller than the upper limit value, the compatibility between the propylene-ethylene block copolymer (D) and the ethylene-propylene copolymer elastomer (E) is more favorable, and it is easy to obtain impact resistance.

As the ethylene-propylene copolymer elastomer (E), an ethylene-propylene copolymer elastomer in which a mass ratio (propylene content/ethylene content) of the propylene content to the ethylene content is in a range of 1.5 to 4, can be used. In the above-described range, it is easy to obtain more excellent cold impact resistance.

The second layer may contain 90% to 50% by mass of the propylene-ethylene block copolymer (D) and 10% to 50% by mass of the ethylene-propylene copolymer elastomer (E). In a case where the content of the propylene-ethylene block copolymer (D) is 50% by mass or more, it is easy to maintain excellent heat resistance. From this point of view, the content may be 60% by mass or more or may be 70% by mass or more. In a case where the content of the propylene-ethylene block copolymer (D) is 90% by mass or more, that is, in a case where the content of the ethylene-propylene copolymer elastomer (E) is at least 10% by mass or more, it is possible to exhibit excellent cold impact resistance. From this point of view, the content of the propylene-ethylene block copolymer (D) may be 87.5% by mass or less or may be 85% by mass or less. From the viewpoint described above, the content of the ethylene-propylene copolymer elastomer (E) may be 12.5% to 40% by mass or may be 15% to 30% by mass.

### <Sealant film 102>

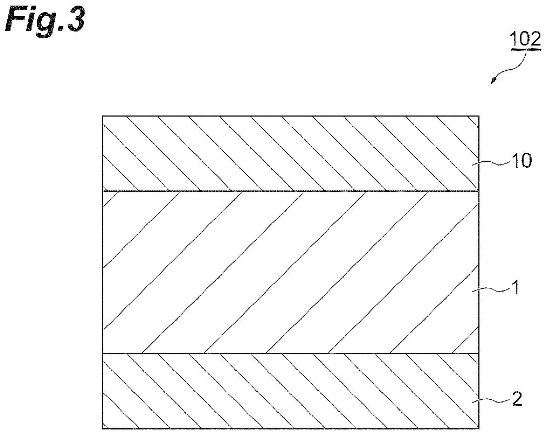

FIG. 3 is a cross-sectional view of a sealant film 102 according to one embodiment of the present invention. The sealant film 102 contains, in the following order, the first layer 10 as a heat seal layer, the second layer 1, and a third layer 2, which contains the propylene homopolymer (A) and the propylene-ethylene random copolymer (B). Since a third layer is provided, it is easy to suppress the distortion or curling of the film.

The mixing ratio (in terms of mass ratio) of the propylene homopolymer (A) to the propylene-ethylene random copolymer (B) in the third layer is not particularly limited; however, it is preferable that the ratio is the same as the ratio in the first layer from the viewpoint of suppressing film curling after film molding.

Since the sealant film is a non-stretched film and can be composed mainly of a polypropylene-based material, it can be called a polypropylene-based non-stretched film.

The thickness of the sealant film is not particularly limited as long as it is within a range in which the sealant film can be used, for example, as a film for a packaging material. However, since there is a cost disadvantage in a case where the film is too thick, the thickness of the film can be set to 100 µm or less, and it may be 50 to 70 µm.

The ratio of the thickness of the first layer in the sealant films 101 and 102 may be 8% to 30% based on the thickness of the sealant film. In a case where the ratio of the thickness of the first layer is equal to or larger than the lower limit value, it is easy to exhibit excellent heat seal strength, and it is equal to or smaller than the upper limit value, it is easy to obtain the cold impact resistance of the film, and it is easy to obtain practicality. From this point of view, the ratio of the thickness of the first layer may be 10% to 25%.

The thickness of the second layer in the sealant films 101 and 102 may be 20 µm or more. As a result, the cold impact resistance of the film is maintained, and sack breakage is less likely to occur even in a case where a sack is stored at low temperatures. From this point of view, the thickness of the second layer may be 25 µm or more or may be 30 µm or more. The upper limit value of the thickness of the second layer is not particularly limited; however, it can be set to 50 µm due to a cost disadvantage.

The ratio of the total thickness of the first layer and the third layer in the sealant film 102 may be 16% to 42% based on the thickness of the sealant film. In a case where the ratio of the total thickness of the first layer and the third layer is equal to or larger than the lower limit value, it is easy to exhibit excellent heat seal strength, and it is equal to or smaller than the upper limit value, it is easy to obtain the cold impact resistance of the film, and it is easy to obtain practicality. From this point of view, the ratio of the total thickness of the first layer and the third layer may be 20% to 35%.

### <Production method for sealant film>

A method of producing a sealant film is not particularly limited, and it is possible to use a publicly known method.

Examples of the method for thermoforming processing of the first to third layers include a melt kneading method using a general mixer such as a single screw extruder, a twin screw extruder, and a multi-screw extrude, and a method of dissolving or dispersively mixing each component and then removing a solvent by heating. In a case where workability is taken into account, a single screw extruder or a twin screw extruder can be used. In a case where a single screw extruder is used, examples of the screw include a full flight screw, a screw having a mixing element, a barrier flight screw, and a fluted screw, and these can be used without any particular restrictions. As a biaxial kneading device, a co-rotating twin screw extruder, a counter-rotating twin screw extruder, or the like can be used, and regarding the shape of the screw, a full flight screw, a kneading disc type, or the like can be used without any particular limitation.

In the above method, each layer can be formed and laminated by melting a raw material of each layer and then forming a film with a T-die by interposing a feed block or a multi-manifold.

As necessary, the obtained sealant film may be appropriately subjected to a surface modification treatment for improving post-process suitability. A printed surface or a surface that comes in contact with a base material may be subjected to surface modification treatment, for example, in order to improve printing suitability in a case of using a film as a simple body or in order to improve lamination suitability in a case of using lamination. Examples of the surface modification treatment include a treatment that generates a functional group by oxidizing a film surface, such as a corona discharge treatment, a plasma treatment, a flame treatment, and a modification treatment using a wet process in which an easy adhesive layer is formed by coating.

### <Packaging material>

The packaging material includes the sealant film described above. The packaging material may include only the sealant film described above and may include other layers. The sealant film is provided in the packaging material so that the first layer, which is a heat seal layer, is on the content side.

### <Packaging materials 200 to 202>

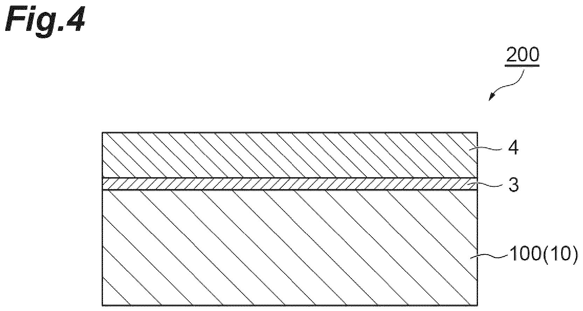

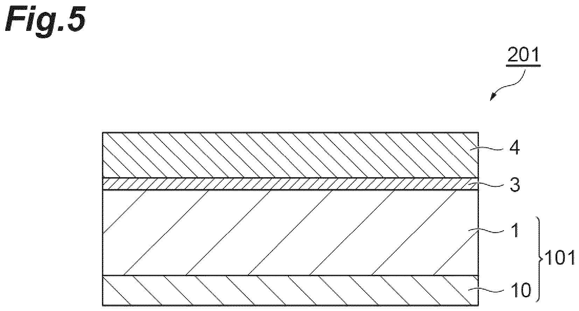

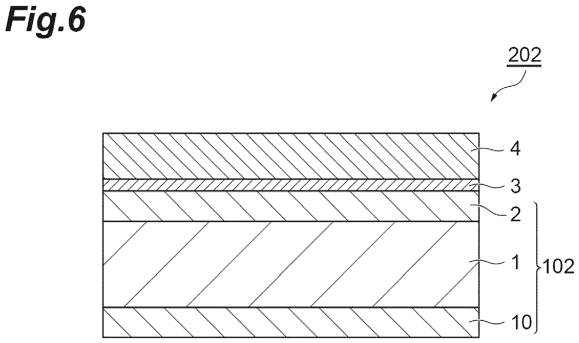

FIGS. 4 to 6 are each a cross-sectional view of a packaging material according to one embodiment of the present invention. In a packaging material 200, the sealant film 100 and a base material 4 are laminated with an adhesive layer 3 being interposed therebetween. In a packaging material 201, the sealant film 101 and the base material 4 are laminated with the adhesive layer 3 being interposed therebetween. In a packaging material 202, the sealant film 102 and the base material 4 are laminated with the adhesive layer 3 being interposed therebetween.

Examples of the base material include a resin film such as a biaxially oriented polyamide film (ONy), a biaxially oriented polyester film (PET), or a biaxially oriented polypropylene film (OPP), a resin film (transparent vapor deposition film) having a metal oxide vapor deposition layer provided on the surface of this resin film, printing paper, and a metal foil (AL foil). The base material may be a single layer of any of these or may be a laminate having two or more kinds thereof. In a case where the base material is a laminate, respective layers may be laminated with an adhesive layer being interposed therebetween.

From the viewpoint of the gas barrier properties of the packaging material, the base material can be a resin film having a metal oxide vapor deposition layer. That is to say, the packaging material can include a sealant film and a resin film having a metal oxide vapor deposition layer. The metal oxide constituting the metal oxide vapor deposition layer includes silicon oxide, aluminum oxide, and the like. From the viewpoint of protecting the metal oxide vapor deposition layer, the resin film may be laminated with the metal oxide vapor deposition layer facing the sealant layer side. The resin film may have a metal oxide vapor deposition layer on both surfaces thereof.

From the viewpoint of the recyclability of the packaging material, the base material can be a biaxially oriented polypropylene film. That is to say, the packaging material can include a sealant film and a biaxially oriented polypropylene film. A packaging material obtained using a biaxially oriented polypropylene film as a base material may be referred to as a same material-packaging material.

From the viewpoint of the gas barrier properties and recyclability of the packaging material, the base material can be a laminate of a resin film having a metal oxide vapor deposition layer and a biaxially oriented polypropylene film. That is to say, the packaging material can include, in the following order, a sealant film, a resin film having a metal oxide vapor deposition layer, and a biaxially oriented polypropylene film. In particular, from the viewpoint of the recyclability of the packaging material, the resin film having a metal oxide vapor deposition layer may be a biaxially oriented polypropylene film having a metal oxide vapor deposition layer.

For example, a polyester-isocyanate-based resin, a urethane resin, a polyether-based resin, an acid-modified product of polyolefin, or the like can be used as a material of the adhesive layer.

The packaging material can be produced by a general dry lamination method in which, as described above, a sealant film and a base material are bonded with an adhesive layer being interposed therebetween. However, the packaging material may be produced by a method of directly extruding a sealant film onto a base material and carrying out lamination.

The configuration of the packaging material can be adjusted appropriately according to the required characteristics of the package, for example, the barrier properties that satisfy the quality retention period of the food to be packaged, the size/impact resistance compatible with the weight of the contents, the visibility of the contents, and recyclability.

### <Package>

The package may be manufactured from the packaging material described above, and the sack manufacturing style is not particularly limited. For example, the packaging material (laminate) described above can be used for a flat sack, a three-sided sack, a butt-seam sack, a gusset sack, a standing pouch, a pouch with a spout, a pouch with a beak, and the like, which use the sealant film as a sealing material.

### [Examples]

Hereinafter, the present invention is described in detail using Examples and Comparative Examples; however, the present invention is not limited to only Examples below.

### <Preparation of material to be used>

A propylene homopolymer (A), a propylene-ethylene random copolymer (B), and an ethylene-α-olefin copolymer elastomer (C1), a propylene-ethylene-α-olefin copolymer elastomer (C2), or a propylene-α-olefin copolymer elastomer (C3), which are described below, were prepared.

### (Propylene homopolymer (A))

A propylene homopolymer having a melting start temperature of 153°C and a melting point of 159°C in a case where differential scanning calorimetry (JIS K 7121) is carried out, in which the melt flow rate (MFR: ISO 1133) (temperature: 230°C, load: 2.16 kg) is 3.0 g/10 minutes.

### (Propylene-ethylene random copolymer (B))

A propylene-ethylene random copolymer having a melting point of 147°C and an ethylene content of 3.4% by mass in a case where differential scanning calorimetry (JIS K 7121) is carried out.

The measurement of the ethylene content was carried out according to the quantification method for an ethylene content (IR method), which is described on pages 412-413 of the Polymer Analysis Handbook (May 10, 2013, 3rd print), edited by the Symposium on Polymer Analysis and Characterization, the Japan Society for Analytical Chemistry.

### (Ethylene-α-olefin copolymer elastomer (C1))

TAFMER A-1085S (trade name, manufactured by Mitsui Chemicals, Inc.), which is an ethylene-1-butene copolymer elastomer, was used. The melt flow rate (MFR: ISO 1133) (temperature: 190°C, load: 2.16 kg) was 1.2 g/10 minutes, the density was 885 kg/m³, and the content of the structural unit derived from ethylene was 84% by mass.

### (Propylene-ethylene-α-olefin copolymer elastomer (C2))

TAFMER PN-3560 (trade name, manufactured by Mitsui Chemicals, Inc.), which is a propylene-ethylene-1-butene copolymer elastomer, was used. The melt flow rate (MFR: ISO 1133) (temperature: 230°C, load: 2.16 kg) was 6.0 g/10 minutes, the density was 866 kg/m³, the content of the structural unit derived from propylene was 73% by mass, the content of the structural unit derived from ethylene was 5% by mass, and the content of the structural unit derived from 1-butene was 22% by mass.

### (Propylene-α-olefin copolymer elastomer (C3))

TAFMER XM-7090 (trade name, manufactured by Mitsui Chemicals, Inc.), which is a propylene-1-butene copolymer elastomer, was used. The melt flow rate (MFR: ISO 1133) (temperature: 230°C, load: 2.16 kg) was 7.0 g/10 minutes, the density was 885 kg/m³, and the content of the structural unit derived from propylene was 89% by mass.

### <Preparation of sealant film>

### (Example 1)

A resin mixture was prepared by mixing 47.4 parts by mass of the propylene homopolymer (A) and 52.6 parts by mass of propylene-ethylene random copolymer (B) in a pellet state and then mixing 5.3 parts by mass of each of the ethylene-α-olefin copolymer elastomer (C1) in an experiment 1, the propylene-ethylene-α-olefin copolymer elastomer (C2) in an experiment 2, and the propylene-α-olefin copolymer elastomer (C3) in an experiment 3, with respect to the total amount of 100 parts by mass of the propylene homopolymer (A) and the propylene-ethylene random copolymer (B). Thereafter, the resin mixture was supplied to an extruder that had been subjected to a temperature control to 250°C, kneaded in a molten state, and then subjected to film molding with a T-die extruder having a feed block so that the thickness of the film was 60 µm, whereby a sealant film of Example 1 was prepared.

### (Examples 2 to 5 and Comparative Examples 1 to 5)

A film was prepared in the same manner as Example 1, except that the mixing ratio of each raw material compound was changed as shown in Table 1 (the experiment 1), Table 3 (the experiment 2), or Table 5 (the experiment 3).

### (Example 6)

As a material to be used for the second layer, the propylene-ethylene block copolymer (D) and the ethylene-propylene copolymer elastomer (E), which are described below, were prepared.

### (Propylene-ethylene block copolymer (D))

A propylene-ethylene block copolymer in which the melt flow rate (MFR: ISO 1133) (temperature: 230°C, load: 2.16 kg) is 1.8 g/10 minutes, the content of the propylene polymer is 81.5% by mass, the content of the ethylene-propylene polymer is 18.5% by mass, and the ethylene content contained in the ethylene-propylene copolymer is 36.2% by weight.

### (Ethylene-propylene copolymer elastomer (E))

An ethylene-propylene copolymer elastomer in which the melt flow rate (MFR: ISO 1133) (temperature: 230°C, load: 2.16 kg) is 0.6 g/10 minutes, and the mass ratio, as propylene content/ethylene content, is 2.7.

For the first layer formation, a resin mixture was prepared by mixing 47.4 parts by mass of the propylene homopolymer (A) and 52.6 parts by mass of propylene-ethylene random copolymer (B) in a pellet state and then mixing 5.3 parts by mass of each of the ethylene-α-olefin copolymer elastomer (C1) in the experiment 1, the propylene-ethylene-α-olefin copolymer elastomer (C2) in the experiment 2, and the propylene-α-olefin copolymer elastomer (C3) in the experiment 3, with respect to the total amount of 100 parts by mass of the propylene homopolymer (A) and the propylene-ethylene random copolymer (B).

For the second layer formation, a resin mixture was prepared by mixing 70% by mass of the propylene-ethylene block copolymer (D) and 30% by mass of the ethylene-propylene copolymer elastomer (E) in a pellet state.

Each resin mixture was supplied to an extruder that had been subjected to a temperature control to 250°C, kneaded in a molten state, and then the lamination was carried out with a T-die extruder having a feed block so that the thickness of the first layer was 15 µm and the thickness of the second layer was 45 µm, whereby a sealant film of Example 6 was prepared.

### (Example 7)

A film was prepared in the same manner as Example 6, except that the mixing ratio of each raw material compound was changed as shown in Table 2 (the experiment 1), Table 4 (the experiment 2), or Table 6 (the experiment 3).

### (Example 8)

For the formation of the first layer and the third layer, a resin mixture was prepared by mixing 47.4 parts by mass of the propylene homopolymer (A) and 52.6 parts by mass of propylene-ethylene random copolymer (B) in a pellet state. Only the resin mixture for the first layer formation was added with 5.3 parts by mass of each of the ethylene-α-olefin copolymer elastomer (C1) in the experiment **1,** the propylene-ethylene-α-olefin copolymer elastomer (C2) in the experiment 2, and the propylene-α-olefin copolymer elastomer (C3) in the experiment 3, with respect to the total amount of 100 parts by mass of the propylene homopolymer (A) and the propylene-ethylene random copolymer (B).

For the second layer formation, a resin mixture was prepared by mixing 70% by mass of the propylene-ethylene block copolymer (D) and 30% by mass of the ethylene-propylene copolymer elastomer (E) in a pellet state.

Each resin mixture was supplied to an extruder that had been subjected to a temperature control to 250°C, kneaded in a molten state, and then the lamination was carried out with a T-die extruder having a feed block so that the thickness of each of the first layer and the third layer was 10 µm and the thickness of the second layer was 40 µm, whereby a sealant film of Example 8 was prepared.

### (Example 9)

A film was prepared in the same manner as Example 8, except that the mixing ratio of each raw material compound was changed as shown in Table 2 (the experiment 1), Table 4 (the experiment 2), or Table 6 (the experiment 3).

### (Comparative Examples 6 and 7)

A film was prepared in the same manner as Example 6, except that the mixing ratio of each raw material compound was changed as shown in Table 2 (the experiment 1), Table 4 (the experiment 2), or Table 6 (the experiment 3).

### (Comparative Examples 8 and 9)

A film was prepared in the same manner as Example 8, except that the mixing ratio of each raw material compound was changed as shown in Table 2 (the experiment 1), Table 4 (the experiment 2), or Table 6 (the experiment 3).

### <Various evaluations>

The film obtained in each example was subjected to the following evaluations. The results are shown in Table 1 to Table 6.

### [Evaluation of low temperature sealability]

The films obtained in each example (the first layer in a case where the film is a laminate) were allowed to be faced with each other and subjected to heat sealing by using a heat sealer manufactured by Tester Sangyo Co., Ltd. under conditions of a seal pressure of 0.2 MPa, a seal time of 1 second, and a seal width of 5 mm. The seal temperature was adjusted in increments of 2°C between 140°C and 160°C. Thereafter, the films that had been subjected to heat sealing at each temperature were cut out to 15 mm wide × 80 mm, and using a tensile testing machine manufactured by Shimadzu Corporation, T-shaped peeling was carried out at a tensile speed of 300 mm/min, and then the heat seal strength of the heat seal portion was measured. A temperature at which the heat seal strength reached 15 N/15 mm or more was defined as the heat seal rise temperature, and a determination was made such that the lower the heat seal rise temperature, the better the low temperature sealability.

### [Evaluation of heat resistance]

The films obtained in each example (the first layer in a case where the film is a laminate) were allowed to be faced with each other and subjected to heat sealing by using a heat sealer manufactured by Tester Sangyo Co., Ltd. under conditions of a seal pressure of 0.05 MPa, a seal time of 30 seconds, a seal width of 10 mm, and a seal temperature of 135°C. Thereafter, the films that had been subjected to heat sealing were cut out to 15 mm wide × 80 mm, and using a tensile testing machine manufactured by Shimadzu Corporation, T-shaped peeling was carried out at a tensile speed of 300 mm/min, and then the heat fusion strength of the heat seal portion was measured. A determination was made such that heat resistance is favorable in a case where the heat fusion strength is 2.0 N/15 mm or less.

**[Table 1]**

| Experiment 1 | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|
| Thickness | | (µm) | 60 | 60 | 60 | 60 | 60 | 60 | 60 | 60 | 60 | 60 |
| Film composition | Resin (A) | (Parts by mass) | 47.4 | 28.9 | 44.4 | 46.0 | 41.5 | 50.0 | - | 100.0 | 47.4 | 47.4 |
| | Resin (B) | (Parts by mass) | 52.6 | 71.1 | 55.6 | 54.0 | 58.5 | 50.0 | 100.0 | - | 52.6 | 52.6 |
| | Resin (C1) | (Parts by mass) | 5.3 | 5.3 | 11.1 | 7.9 | 6.8 | - | - | - | 12.0 | 3.0 |
| Heat seal rise temperature | | (°C) | 150 | 150 | 150 | 150 | 150 | 156 | 152 | 160 | 150 | 156 |
| Heat fusion strength | | (N/15 mm) | 0.30 | 1.15 | 1.52 | 0.43 | 1.53 | 0.14 | 3.06 | 0.19 | 5.87 | 0.25 |

**[Table 2]**

| Experiment 1 | | | Example 6 | Example 7 | Example 8 | Example 9 | Comparative Example 6 | Comparative Example 7 | Comparative Example 8 | Comparative Example 9 |
|---|---|---|---|---|---|---|---|---|---|---|
| Thickness | Overall | (µm) | 60 | 60 | 60 | 60 | 60 | 60 | 60 | 60 |
| | First layer | (µm) | 15 | 15 | 10 | 10 | 15 | 15 | 10 | 10 |
| | Second layer | (µm) | 45 | 45 | 40 | 40 | 45 | 45 | 40 | 40 |
| | Third layer | (µm) | - | - | 10 | 10 | - | - | 10 | 10 |
| Composition of first layer | Resin (A) | (Parts by mass) | 47.4 | 44.4 | 47.4 | 44.4 | 47.4 | 47.4 | 47.4 | 47.4 |
| | Resin (B) | (Parts by mass) | 52.6 | 55.6 | 52.6 | 55.6 | 52.6 | 52.6 | 52.6 | 52.6 |
| | Resin (C1) | (Parts by mass) | 5.3 | 11.1 | 5.3 | 11.1 | 12.0 | 3.0 | 12.0 | 3.0 |
| Composition of second layer | Resin (D) | (% by mass) | 70.0 | 70.0 | 70.0 | 70.0 | 70.0 | 70.0 | 70.0 | 70.0 |
| | Resin (E) | (% by mass) | 30.0 | 30.0 | 30.0 | 30.0 | 30.0 | 30.0 | 30.0 | 30.0 |
| Composition of third layer | Resin (A) | (Parts by mass) | - | - | 47.4 | 44.4 | - | - | 47.4 | 47.4 |
| | Resin (B) | (Parts by mass) | - | - | 52.6 | 55.6 | - | - | 52.6 | 52.6 |
| Heat seal rise temperature | | (°C) | 150 | 150 | 150 | 150 | 150 | 156 | 150 | 156 |
| Heat fusion strength | | (N/15 mm) | 0.35 | 1.23 | 1.45 | 1.30 | 6.43 | 0.22 | 6.13 | 0.25 |

**[Table 3]**

| Experiment 2 | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|
| Thickness | | (µm) | 60 | 60 | 60 | 60 | 60 | 60 | 60 | 60 | 60 | 60 |
| Film composition | Resin (A) | (Parts by mass) | 47.4 | 10.5 | 42.9 | 11.1 | 28.1 | 50.0 | - | 100.0 | 42.1 | 47.4 |
| | Resin (B) | (Parts by mass) | 52.6 | 89.5 | 57.1 | 88.9 | 71.9 | 50.0 | 100.0 | - | 57.9 | 52.6 |
| | Resin (C2) | (Parts by mass) | 5.3 | 5.3 | 14.2 | 11.1 | 8.6 | - | - | - | 15.7 | 3.0 |
| Heat seal rise temperature | | (°C) | 150 | 150 | 150 | 150 | 150 | 156 | 152 | 160 | 150 | 156 |
| Heat fusion strength | | (N/15 mm) | 0.94 | 1.43 | 1.85 | 1.78 | 0.31 | 0.14 | 3.06 | 0.19 | 2.87 | 0.25 |

**[Table 4]**

| Experiment 2 | | | Example 6 | Example 7 | Example 8 | Example 9 | Comparative Example 6 | Comparative Example 7 | Comparative Example 8 | Comparative Example 9 |
|---|---|---|---|---|---|---|---|---|---|---|
| Thickness | Overall | (µm) | 60 | 60 | 60 | 60 | 60 | 60 | 60 | 60 |
| | First layer | (µm) | 15 | 15 | 10 | 10 | 15 | 15 | 10 | 10 |
| | Second layer | (µm) | 45 | 45 | 40 | 40 | 45 | 45 | 40 | 40 |
| | Third layer | (µm) | - | - | 10 | 10 | - | - | 10 | 10 |
| Composition of first layer | Resin (A) | (Parts by mass) | 47.4 | 42.9 | 47.4 | 42.9 | 42.1 | 47.4 | 42.1 | 47.4 |
| | Resin (B) | (Parts by mass) | 52.6 | 57.1 | 52.6 | 57.1 | 57.9 | 52.6 | 57.9 | 52.6 |
| | Resin (C2) | (Parts by mass) | 5.3 | 14.2 | 5.3 | 14.2 | 15.7 | 3.0 | 15.7 | 3.0 |
| Composition of second layer | Resin (D) | (% by mass) | 70.0 | 70.0 | 70.0 | 70.0 | 70.0 | 70.0 | 70.0 | 70.0 |
| | Resin (E) | (% by mass) | 30.0 | 30.0 | 30.0 | 30.0 | 30.0 | 30.0 | 30.0 | 30.0 |
| Composition of third layer | Resin (A) | (Parts by mass) | - | - | 47.4 | 42.9 | - | - | 42.1 | 47.4 |
| | Resin (B) | (Parts by mass) | - | - | 52.6 | 57.1 | - | - | 57.9 | 52.6 |
| Heat seal rise temperature | | (°C) | 150 | 150 | 150 | 150 | 150 | 156 | 150 | 156 |
| Heat fusion strength | | (N/15 mm) | 0.96 | 1.89 | 0.85 | 1.73 | 4.67 | 0.28 | 0.42 | 0.37 |

**[Table 5]**

| Experiment 3 | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|
| Thickness | | (µm) | 60 | 60 | 60 | 60 | 60 | 60 | 60 | 60 | 60 | 60 |
| Film composition | Resin (A) | (Parts by mass) | 47.4 | 37.5 | 12.5 | 28.9 | 27.5 | 50.0 | - | 100.0 | 45.6 | 47.4 |
| | Resin (B) | (Parts by mass) | 52.6 | 62.5 | 87.5 | 71.1 | 72.5 | 50.0 | 100.0 | - | 54.4 | 52.6 |
| | Resin (C3) | (Parts by mass) | 5.3 | 25.0 | 25.0 | 5.3 | 12.4 | - | - | - | 26.6 | 3.1 |
| Heat seal rise temperature | | (°C) | 150 | 150 | 150 | 150 | 150 | 156 | 152 | 160 | 150 | 156 |
| Heat fusion strength | | (N/15 mm) | 0.30 | 1.15 | 1.52 | 0.43 | 1.53 | 0.14 | 3.06 | 0.19 | 12.00 | 0.28 |

**[Table 6]**

| Experiment 3 | | | Example 6 | Example 7 | Example 8 | Example 9 | Comparative Example 6 | Comparative Example 7 | Comparative Example 8 | Comparative Example 9 |
|---|---|---|---|---|---|---|---|---|---|---|
| Thickness | Overall | (µm) | 60 | 60 | 60 | 60 | 60 | 60 | 60 | 60 |
| | First layer | (µm) | 15 | 15 | 10 | 10 | 15 | 15 | 10 | 10 |
| | Second layer | (µm) | 45 | 45 | 40 | 40 | 45 | 45 | 40 | 40 |
| | Third layer | (µm) | - | - | 10 | 10 | - | - | 10 | 10 |
| Composition of first layer | Resin (A) | (Parts by mass) | 47.4 | 37.5 | 47.4 | 37.5 | 45.6 | 47.4 | 45.6 | 47.4 |
| | Resin (B) | (Parts by mass) | 52.6 | 62.5 | 52.6 | 62.5 | 54.4 | 52.6 | 54.4 | 52.6 |
| | Resin (C3) | (Parts by mass) | 5.3 | 25.0 | 5.3 | 25.0 | 26.6 | 3.1 | 26.6 | 3.1 |
| Composition of second layer | Resin (D) | (% by mass) | 70.0 | 70.0 | 70.0 | 70.0 | 70.0 | 70.0 | 70.0 | 70.0 |
| | Resin (E) | (% by mass) | 30.0 | 30.0 | 30.0 | 30.0 | 30.0 | 30.0 | 30.0 | 30.0 |
| Composition of third layer | Resin (A) | (Parts by mass) | - | - | 47.4 | 37.5 | - | - | 45.6 | 47.4 |
| | Resin (B) | (Parts by mass) | - | - | 52.6 | 62.5 | - | - | 54.4 | 52.6 |
| Heat seal rise temperature | | (°C) | 150 | 150 | 150 | 150 | 150 | 156 | 150 | 156 |
| Heat fusion strength | | (N/15 mm) | 0.38 | 1.21 | 0.43 | 1.36 | 13.80 | 0.23 | 12.60 | 0.31 |

### Industrial applicability

The sealant film according to the present invention makes it possible to achieve both heat resistance and low temperature sealability at a high level, while being a polypropylene-based film. Therefore, the sealant film according to the present invention can be suitably used in a polypropylene-based mono-material packaging material (retort packaging material).

### Reference Signs List

1 Second layer
2 Third layer
3 Adhesive layer
4 Base material
10 First layer
100 to 102 Sealant film
200 to 202 Packaging material

## Claims

1. A sealant film comprising:
a first layer, which contains a propylene homopolymer (A), a propylene-ethylene random copolymer (B), and an ethylene-α-olefin copolymer elastomer (C1),
wherein a content of the ethylene-α-olefin copolymer elastomer (C1) is 5.0 to 11.5 parts by mass with respect to a total amount of 100 parts by mass of the propylene homopolymer (A) and the propylene-ethylene random copolymer (B).

2. The sealant film according to Claim 1, wherein a mass ratio of a content of the propylene homopolymer (A) to a content of the propylene-ethylene random copolymer (B) is 0.40 to 0.95.

3. A sealant film comprising:
a first layer, which contains a propylene homopolymer (A), a propylene-ethylene random copolymer (B), and a propylene-ethylene-α-olefin copolymer elastomer (C2),
wherein a content of the propylene-ethylene-α-olefin copolymer elastomer (C2) is 5.0 to 14.5 parts by mass with respect to a total amount of 100 parts by mass of the propylene homopolymer (A) and the propylene-ethylene random copolymer (B).

4. The sealant film according to Claim 3, wherein a mass ratio of a content of the propylene homopolymer (A) to a content of the propylene-ethylene random copolymer (B) is 0.10 to 0.95.

5. A sealant film comprising:
a first layer, which contains a propylene homopolymer (A), a propylene-ethylene random copolymer (B), and a propylene-α-olefin copolymer elastomer (C3),
wherein a content of the propylene-α-olefin copolymer elastomer (C3) is 5.0 to 25.0 parts by mass with respect to a total amount of 100 parts by mass of the propylene homopolymer (A) and the propylene-ethylene random copolymer (B).

6. The sealant film according to Claim 5, wherein a mass ratio of a content of the propylene homopolymer (A) to a content of the propylene-ethylene random copolymer (B) is 0.12 to 0.95.

7. The sealant film according to any one of Claims 1 to 6, comprising:
the first layer; and
a second layer, which contains a propylene-ethylene block copolymer (D) and an ethylene-propylene copolymer elastomer (E).

8. The sealant film according to Claim 7, comprising, in the following order:
the first layer;
the second layer; and
a third layer, which contains the propylene homopolymer (A) and the propylene-ethylene random copolymer (B).

9. The sealant film according to Claim 7 or 8, wherein the second layer contains 90% to 50% by mass of the propylene-ethylene block copolymer (D) and 10% to 50% by mass of the ethylene-propylene copolymer elastomer (E).

10. The sealant film according to any one of Claims 7 to 9, wherein a thickness of the second layer is 20 µm or more.

11. A packaging material comprising:
the sealant film according to any one of Claims 1 to 10; and
a resin film having a metal oxide vapor deposition layer.

12. A packaging material comprising:
the sealant film according to any one of Claims 1 to 10; and
a biaxially oriented polypropylene film.

13. A package manufactured from the packaging material according to Claim 11 or 12.
